# EUROPÄISCHE PATENTANMELDUNG

(11) **EP 0 532 976 A1**
(43) Veröffentlichungstag der Anmeldung: **24.03.1993**
(21) Anmeldenummer: 92114947.2
(22) Anmeldetag: 02.09.1992
(51) Int. Cl.: G01S 17/02

(54) **Einrichtung zum Objektschutz**

(30) Priorität: 14.09.1991 DE 4130619
(71) Anmelder: Daimler-Benz Aerospace Aktiengesellschaft, D-81663 München (DE)
(72) Erfinder: Otto, Ulrich, W-8221 Nussdorf im Chiemgau (DE)

(57) **Zusammenfassung**

Einrichtung zum Objektschutz von Gebäuden, Fahrzeugen und Personen mittels einer Laser-Überwachungseinrichtung, bestehend aus Lasersender und -empfänger und einer zugeordneten Auswerteinheit, wobei auf einem erhöhten, sichtfreien Standpunkt über dem zu schützenden Objekt eine mit variabel einstellbaren Umdrehungszahlen rotierende Plattform angeordnet ist, auf der die raumüberwachende Lasereinrichtung befestigt ist sowie zusätzlich Lage- und Wendekreisel, die mit einer externen Auswert- und Steuereinheit kommunizierend verbunden ist, die aufgrund gespeicherter Kenndaten Veränderungen feststellt, identifiziert, anzeigt und auf einmal erkannte geographische Punkte bzw. Raster aufschalten kann.

## Beschreibung

Die Erfindung bezieht sich auf eine Einrichtung zum Objektschutz von Gebäuden und Personen gemäß dem Oberbegriff des Anspruchs 1.

Objektschutzeinrichtungen sind in den vielfältigsten Ausführungsformen bereits bekannt, wie beispielsweise die DE 22 55 788 und die DE 34 23 299 A1 offenbaren. Hierbei handelt es sich jedoch fast ausschließlich um sogenannte Lichtschranken-Systeme oder Einrichtungen, die auf der Basis von Video-Systemen arbeiten und daher mehr oder weniger fest installiert auf eine "Zielrichtung" festgelegt sind.

Eine umfangreiche und aufwendige Einrichtung ist aus der GB 2 183 878 A bekannt, die auf der Basis eines Bildvergleichs arbeitet, bei dem ein gespeichertes Normalbild zugrundeliegt und an dem alle laufend aufgenommenen weiteren Bilder verglichen werden und so jede Änderung - beispielsweise durch in den überwachten Raum eindringende Personen - festgestellt werden. Die vorgeschlagenen Maßnahmen erfordern nicht nur einen sehr hohen gerätemäßigen, sondern auch einen hohen Verarbeitungsaufwand, so daß sie nicht für mobile Zwecke einsetzbar sind.

Der Erfindung liegt die Aufgabe zugrunde, eine Einrichtung der eingangs genannten Art zu schaffen, mit dem die Nachteile des Standes der Technik beseitigt werden, also in Bauteilen und Verarbeitungsaufwand minimiert ist, sondern auch für mobile Objekte eingesetzt werden kann.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung werden Ausführungsbeispiele erläutert. Diese Erläuterungen werden durch die Figuren der Zeichnung ergänzt. Es zeigen:
- Fig. 1: ein Schemabild eines Ausführungsbeispiels, das einem Gebäudeschutz entspricht,
- Fig. 2: eine Seitenansicht einer bestückten Kreiselplattform in schematischer Darstellung,
- Fig. 3: ein Blockschaltbild eines Ausführungsbeispiels mit zusätzlichen Sensoren in vereinfachter Darstellung,
- Fig. 4: ein Schemabild eines Ausführungsbeispiels einer mobilen Einrichtung auf einem Kraftfahrzeug, z. B. als Vorabfahrzeug bzw. Begleitfahrzeug in einer Fahrzeugkolonne.

Die Grundidee der Erfindung ist, eine Einrichtung zum Objektschutz von Gebäuden, Fahrzeugen und Personen zu schaffen, die in ihrem Konzept nahezu unverändert stationär und mobil einsetzbar ist, also sowohl auf Gebäuden als auch auf Fahrzeugen installiert werden kann. Das heißt, der gerätemäßige Grundaufbau, die Arbeitsweise und Funktion ist in allen Fällen gleich und erlaubt daher eine serienmäßige Vorfertigung, die je nach Gegebenheiten durch zusätzliche Geräte etc. erweiterbar ist.

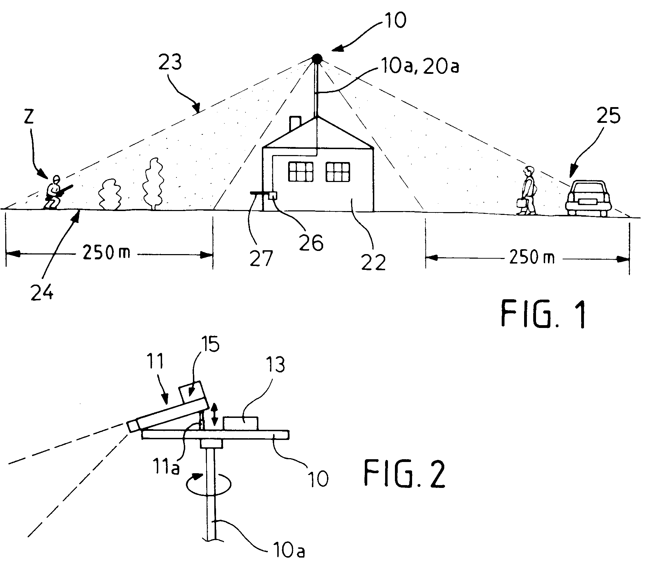

Für stationäre Objekte ist die vorgenannte Einrichtung zum Objektschutz allein schon vom Steuerprogramm des Computers her einfacher als bei einem mobilen Objekt, wie nachstehend noch erläutert wird. In Figur 1 ist der relativ einfache Fall des Schutzes eines Gebäudes dargestellt. Hier wird auf einem Mast 20a die in Figur 2 skizzierte Objektschutzeinrichtung angeordnet. Dieser Mast 20a kann beispielsweise ein Führungsrohr sein, in dem die Drehstange 10a der Plattform 10 gehalten und gelagert ist. Die Länge desselben richtet sich nach der Gestalt des Objektes 22 und dessen Umgebung, damit ein ausreichend großer Raum rundum sichtfrei überwacht werden kann, wie dies in Figur 1 veranschaulicht ist.

Hierzu dient nun die Plattform 10, die von der Steuereinheit der Auswerteinheit 12 mit variabler Drehgeschwindigkeit in Rotation versetzt wird. Auf dieser Plattform 10 ist nun eine Lasereinrichtung 11 so angeordnet, daß sie - beispielsweise mittels einer längenveränderlichen Einrichtung 11a - verschiedene Winkelstellungen einnehmen kann, wodurch die von der Laserkeule beleuchteten Flächen in ihrer Entfernung vom Objekt 22 variiert werden können. Außerdem wird die Sendeoptik des Lasers 11 so ausgebildet sein, daß der Laserstrahl 23 variabel aufweitbar ist und somit die beleuchtete Fläche 24 ebenfalls einstellbar ist.

Zusätzlich ist auf der drehbaren Plattform 10 bzw. der Lasereinrichtung/Sensoren 11, 13, 14 ein Lage- und Wendekreisel 15 integriert, um den Raumbezug bzw. die Zuordnung von neuen Daten zu bekannten Fixpunkten von eingehenden Daten herzustellen bzw. Azimut und Elevation eines im Computer abgespeicherten bzw. vorgegebenen Punktes bzw. Rasters wieder aufzufinden. Die Kreiseleinrichtung 15 dient auch zur Stabilisierung der Bewegungseinrichtung 11a.

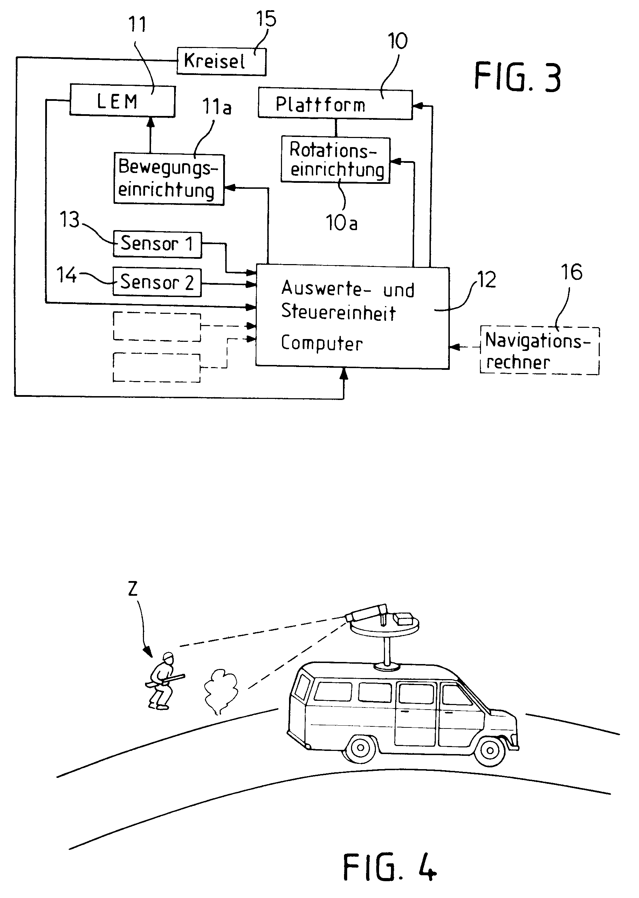

In der mobilen Version gemäß Figur 4 kann die obige Kreiseleinrichtung 15 auch als Trägheitsplattform mit Kurskreisel, Kreiselbeschleunigungsmesser, Lagemeßgeber bzw. Lotkreisel einschließlich Beschleunigungsmesser ausgebildet sein.

Extern zur Plattform 10 ist nun eine Auswert- und Steuereinheit 12, 26 angeordnet, die von einem Mikroprozessor mit Speichereinheit gebildet sein kann. Diese Einheit steuert aufgrund in ihrem Speicher eingegebener Daten und Programme die Rotation, die Winkelstellungen, die beleuchteten Strahlflächen usw. und vergleicht die Eingangsinformationen mit den gespeicherten. Außerdem übernimmt der Mikroprozessor in Verbund mit der Kreiseleinrichtung 15 das Datenmanagement, um bekannte abgespeicherte Punkte/Raster neuen Daten räumlich zuzuordnen sowie die Auswertung bzw. die spätere schnelle Wiederaufschaltung auf vorgegebene (Fix-)Punkte zu gewährleisten. Ergeben sich hier Unregelmäßigkeiten, so werden diese entweder durch Alarm signalisiert oder sichtbar angezeigt. Hierzu sind zu zählen: Körperbewegungen, ungewöhnliche Konturen - beispielsweise gebückter menschlicher Körperumriß mit vorstehendem geraden, schlanken Körper (Mensch, der ein Gewehr in der Hand trägt) oder lange Verweilzeit, ungewöhnlicher Standort Z usw..

In einer erweiterten Ausführungsform wird vorgeschlagen, daß die Lasereinrichtung 11 ein Laserentfernungsmesser LEM ist, der auf der rotierenden Plattform 10 nach einem computergesteuerten Suchraster bewegt wird. Diesem Laser sind ein oder mehrere Sensoren - beispielsweise Metall- und/oder Akustiksensoren, Infrarotsensoren, Richtmikrophon etc. 13, 14 ... - angeordnet, die ihre Signale parallel zum Laser- oder Laserentfernungssignal der Auswert- und Steuereinheit 12 eingeben und dort entsprechend zur Zieldetektion und Zielidentifikation verarbeitet werden. Die entsprechend ermittelten Signale können im Identifikationsfall automatisch von der Auswert- und Steuereinheit 12, 26 an diverse Kommandozentralen 27, Polizei usw. weitergeleitet werden.

Sie können in einem weiteren Ausführungsbeispiel aber auch Bekämpfungs- oder Enttarnungseinrichtungen zu deren Aktivierung weitergegeben werden. Es versteht sich, daß bei dieser Ausführungsform solche Einrichtungen, wie Scheinwerfer, Schutzgitter usw. ebenfalls synchron vom Computer 12, 26 gesteuert werden. Eine besonders sicherheitsfördernde Maßnahme ist in diesem Falle, wenn der zuerst im augensicheren Bereich arbeitende Laser - man könnte ihn als "Suchlaser" bezeichnen - automatisch in seiner Laserleistung verstärkbar ist und dann als "Blendlaser" dient. In ihrer Leistung variierbare Laser sind auch durch die Anmelderin bekannt geworden und können problemlos auf bestimmte "Blendzeiten" eingestellt werden.

Die vorgeschlagene Einrichtung läßt sich auch ohne großen Aufwand bei Fahrzeugen im mobilen Einsatz verwenden, beispielsweise auf einer am Fahrzeugdach montierten Halteeinrichtung für den Plattform-Trägerstab 10a (Figur 4). Hier wird sich vor allem die Verwendung eines LEM mit synchron gekoppelten weiteren Detektoren empfehlen. Der moderne Stand der heutigen Mikroelektronik erlaubt problemlos die Herstellung kleindimensionierter Einrichtungen 10, die beispielsweise kein größeres Volumen einnehmen, wie das "Blaulicht" bei Polizei und Feuerwehr etc..

Weiterhin wird vorgeschlagen, die raumüberwachende Lasereinrichtung (11) mit einem Wärmebildgerät achsharmonisiert zu verbinden und dessen Empfangsbilder auf einem Monitor sichtbar zu machen. Zahlreiche Varianten und Kombinationen der vorbeschriebenen Ausführungsbeispiele sind denkbar.

## Patentansprüche

1. Einrichtung zum Objektschutz von Gebäuden, Fahrzeugen und Personen mittels einer Laser-Überwachungseinrichtung, bestehend aus Lasersender und -empfänger und einer zugeordneten Auswerteinheit, **dadurch gekennzeichnet**, daß auf einem erhöhten, sichtfreien Standpunkt über dem zu schützenden Objekt eine mit variabel einstellbaren Umdrehungszahlen rotierende Plattform (10) angeordnet ist, auf der die raumüberwachende Lasereinrichtung (11) befestigt und mit einer externen Auswert- und Steuereinheit (12) kommunizierend verbunden ist, die aufgrund gespeicherter Kenndaten Veränderungen feststellt, identifiziert und anzeigt.

2. Einrichtung nach Anspruch 1, **dadurch gekennzeichnet**, daß die raumüberwachende Lasereinrichtung (11) ein Laserentfernungsmesser (LEM) ist, der auf der rotierenden Plattform (10) nach einem computergesteuerten Suchraster bewegt wird.

3. Einrichtung nach Anspruch 1 oder 2, **dadurch gekennzeichnet**, daß auf der Plattform (10) in Kombination mit der raumüberwachenden Lasereinrichtung (11) weitere Sensoren (13, 14, ..) - wie Metalldetektor, Richtmikrophon, Akustiksensor oder Infrarotsensor angeordnet sind, die ihre Signale parallel zum Lasersignal der Auswerteinheit eingeben und dort entsprechend zur Zieldetektion verarbeitet werden.

4. Einrichtung nach den Ansprüchen 1 bis 3, **dadurch gekennzeichnet**, daß die Auswert- und Steuereinheit (12) ein Mikroprozessor mit Speichereinheit ist, ggf. gekoppelt mit einem Navigationsrechner (16).

5. Einrichtung nach den Ansprüchen 1 bis 4, **dadurch gekennzeichnet**, daß auf der Plattform (10) bzw. Lasereinrichtung/Sensoren (11, 13, 14) Lage- und Wendekreisel integriert sind bzw. die Trägheitsplattform mit entsprechenden Einrichtungen funktionell mit dem Computer (12) verbunden sind.

6. Einrichtung nach Anspruch 1, **dadurch gekennzeichnet**, daß die raumüberwachende Lasereinrichtung (11) mit einem Wärmebildgerät (WBK) achsharmonisiert verbunden ist, dessen Empfangsbilder in einen externen Monitor eingehen.

7. Einrichtung nach einem der Ansprüche 1 bis 6, **dadurch gekennzeichnet**, daß die Sendeoptik der Lasereinrichtung (11) als Zoom-Optik ausgebildet ist.

8. Einrichtung nach einem der Ansprüche 1 bis 7, **dadurch gekennzeichnet**, daß die Laserleistung in Energie und Intensität einstellbar ist.
